# EUROPÄISCHE PATENTSCHRIFT

(11) **EP 2 476 518 B1**
(45) Veröffentlichungstag und Bekanntmachung des Hinweises auf die Patenterteilung: **02.10.2019**
(21) Anmeldenummer: 12151383.2
(22) Anmeldetag: 17.01.2012
(51) Int. Cl.: B25B 23/04, B25B 23/10, B25B 21/00, E04D 15/04, B23P 19/00

(54) **Befestigungselementsetzeinheit**
Fixing element positioning unit
Unité d'insertion d'un élément de fixation

(30) Priorität: 17.01.2011 DE 102011002791
(43) Veröffentlichungstag der Anmeldung: 18.07.2012
(73) Patentinhaber: EJOT Baubefestigungen GmbH, 57334 Bad Laasphe (DE)
(72) Erfinder: Weber, Dr. Jens O., 57250 Netphen (DE); Angar, Yasir, 33332 Gütersloh (DE); Blank, Gerhard, 35216 Biedenkopf (DE); Geßner, Marco, 57319 Bad Berleburg (DE); Gödecke, Frank, 35216 Biedenkopf (DE); Robohm, André, 40477 Düsseldorf (DE)
(74) Vertreter: Hohgardt, Martin

(56) Entgegenhaltungen:
- EP-A1- 2 632 629
- JP-A- S62 107 932
- US-A1- 2005 072 276
- US-B1- 7 082 857

## Beschreibung

Die vorliegende Erfindung betrifft eine Befestigungselementsetzeinheit für ein Befestigungselementsetzgerät, insbesondere für ein Stand-Up-Tool zum Setzen von Schrauben welche mit einer Dichtscheibe versehen sind, sowie ein entsprechendes Verfahren.

Aus der DE 297 05 480 U1 ist ein Schraubgerät bekannt mit einem Haltegriff und einem Schrauberkopf, in dem ein Schraubwerkzeug axial verschieblich gegen eine Rückstellfeder angeordnet ist, sowie mit einer Schraubenaufnahmekammer, mit federbelasteten Klemmbacken, einem Kopfanschlag zur Zentrierung einer Schraube und einem seitlich dazu und senkrecht zur Schrauberachse verschiebbar angeordneten Verstellschlitten mit einer Anschlagvorrichtung. Aus der Schraubenaufnahmekammer ist eine Magazinschiene mit einem biegsamen Magazinierstreifen bogenförmig herausgeführt. Der Kopfanschlag für den Schraubenkopf ist mit einem austauschbaren, halbzylindrischen, hohlen Anschlageinsatz bestückt. Zentrisch zu dem Kopfanschlageinsatz sind die Klemmbacken mit einer Einführtrichterausnehmung angeordnet, die mit den seitlichen Blattfedern zusammengehalten wird.

In der EP 0 805 736 B1 wird eine Schraubvorrichtung beschrieben, bei der der Kopf der vordersten Schraube des Streifens ausgerichtet wird, um mit einem Schraubenantriebsbit in Eingriff zu gelangen. Dazu ist ein Anschlagbock mit einem oberen und einem unteren Abschnitt mit jeweils unterschiedlichen Radien vorgesehen, gegen den der Kopf der vordersten Schraube in Anschlag gebracht wird. Die Anschlagblockabschnitte besitzen Anschlagoberflächen, die jeweils zu dem Profil des Kopfes und der Scheibe der vordersten Schraube passen, so dass die Schraube akkurat positioniert und in die Materialoberfläche hineingeschraubt werden kann.

Aus der EP 1 226 900 B1 ist des Weiteren ein Setzgerät zum Eintreiben von Befestigungsmitteln in ein Werkstück bekannt, welches unter anderem ein Mundstück zur Aufnahme eines Befestigungsmittels und zur Führung und Ausrichtung des Befestigungsmittels beim Eintreiben aufweist. Im Gebrauch wird manuell ein Befestigungsmittel in das Zuführrohr eingeführt. Das Befestigungsmittel wird durch Schwerkraft zum Mundstück geführt, wo es durch Backen gestützt wird. Ein Abwärtsdruck bewegt dann das obere und das untere Rohr in die zusammengezogene bzw. Antriebsposition, welche das Befestigungsmitteleingriffselement mit dem Kopf des Befestigungsmittels in Eingriff bringt. Durch weiteren Abwärtsdruck wird die obere Führung der Mundstückanordnung nach unten gedrückt, um die Backen zu entriegeln. Bei weiterem Druck wird das Befestigungsmittel durch die Backen gedrückt und in das jeweilige Werkstück eingetrieben.

In der JP S62 107932 A ist eine Schraubvorrichtung gezeigt, die Unterlegscheiben hält und in diese die Schrauben vor dem Schrauben einführt.

Die bekannten Vorrichtungen weisen zwar Mund- bzw. Anschlagstücke zum Zentrieren von Schrauben auf, sie sorgen jedoch nicht für eine definierte Übergabe einer Schraube von einem Vereinzeler in ein Mundstück. Bei der Verwendung von Schrauben mit Dichtscheiben kann es somit bedingt durch die ggf. hohe Kopflastigkeit der Schraube zu einem Schiefstellen bzw. Verkanten der Schraube im Mundstück kommen. Dieses Problem kann sich allerdings auch bei Schrauben ohne Dichtscheibe stellen.

Es ist daher die Aufgabe der vorliegenden Erfindung, eine Befestigungselementsetzeinheit für ein Befestigungselementsetzgerät, zum Setzen von Schrauben mit Dichtscheiben, bereitzustellen, mittels der ein nachteiliger Fallweg der Schraube vom Vereinzeler zum Mundstück minimiert wird, um eine gesicherte Übergabe in das Mundstück zu gewährleisten.

Diese Aufgabe wird erfindungsgemäß durch eine Befestigungselementsetzeinheit für ein Befestigungselementsetzgerät, zum Setzen von Schrauben welche mit einer Dichtscheibe versehen sind, nach Anspruch 1 gelöst. Die Aufgabe wird zudem gelöst durch ein Verfahren zum zentrierten Setzen von Befestigungselementen, Schrauben welche mit einer Dichtscheibe versehen sind, nach Anspruch 11 gelöst.

In einer bevorzugten Ausführungsform der Erfindung ist durch eine weitere Relativbewegung der Befestigungselementantriebsanordnung gegenüber der Befestigungselementhalteanordnung und der Mundstückanordnung das Befestigungselement durch die Mundstückanordnung hindurch in einen Untergrund eintreibbar. Auf diese Weise wird das zentriert von der Befestigungselementhalteanordnung übernommene Befestigungselement gerade in den Untergrund eingeschraubt oder ggf. eingeschlagen.

In einer anderen bevorzugten Ausführungsform der Erfindung weist die Linearlagerung zumindest ein erstes Federelement auf. Bei einer Bewegung der Befestigungselementantriebsanordnung in Richtung der Mundstückanordnung wird dieses Federelement komprimiert und sorgt so auch für die erforderliche Rückstellkraft.

In einer weiteren bevorzugten Ausführungsform der Erfindung ist die Befestigungselementantriebsanordnung über ein zweites Federelement oder über einen lösbaren Kopplungsmechanismus mit der Befestigungselementhalteanordnung gekoppelt. Das zweite Federelement ist dabei in der Regel kürzer dimensioniert als das erste Federelement. Auf diese Weise kann die Befestigungselementantriebsanordnung nach einer gemeinsamen Bewegung zusammen mit der Befestigungselementhalteanordnung in Richtung des Mundstücks, ggf. nach einem Anschlag der Befestigungselementhalteanordnung an der Mundstückanordnung, alleine, d.h. ohne die Befestigungselementhalteanordnung, weiter in Richtung der Mundstückanordnung und zumindest teilweise durch diese hindurch bewegt werden. Der lösbare Kopplungsmechanismus ist ggf. ein üblicher durch eine Anschlagkraft lösbarer Mechanismus, welcher nach einem Anschlag der Befestigungselementhalteanordnung (z.B. an der Mundstückanordnung) die Befestigungselementhalteanordnung von der Befestigungselementantriebsanordnung entkoppelt.

In einer anderen bevorzugten Ausführungsform der Erfindung weist die Mundstückanordnung einen Grundkörper mit einer Durchgangsöffnung für das Befestigungselement sowie zumindest zwei federnd in dem Grundkörper gelagerte Mundstückbacken auf, welche die Durchgangsöffnung im unbetätigten Zustand verschließen. Die Mundstückbacken können allerdings eine Öffnung zur Aufnahme von zumindest der Spitze des Befestigungselementschafts im geschlossenen Zustand aufweisen. Hierdurch wird die Zentrierung des Befestigungselements sichergestellt.

In einer weiteren bevorzugten Ausführungsform der Erfindung weisen die zumindest zwei Mundstückbacken eine konische Form auf, wobei vorzugsweise ein Aufnahmetrichter mit stufenloser Innenwandung gebildet wird, durch den das Befestigungselement glatt hindurch gleiten kann. Auf diese Weise kann eine optimale Anpassung an die Form des Befestigungsmittels, insbesondere bei Schrauben mit einer Dichtscheibe, gewährleistet werden sowie eine definierte Führung des Befestigungselements innerhalb des Mundstückbacken.

In einer noch weiteren bevorzugten Ausführungsform der Erfindung weist die Befestigungselementhalteanordnung lösbare Haltebacken zum Halten und Freigeben des Befestigungselements sowie einen mit den Haltebacken verbundenen Schlitten auf. Hierdurch können die aus einem in das Setzgerät einbringbaren Magazinstreifen gelieferten Befestigungselemente bzw. Schrauben einzeln aufgenommen, in die Mundstückbacken hereingeführt und zum Eintreiben bzw. Verschrauben wieder freigegeben werden. Der Schlitten dient zur Führung der Befestigungselementhalteanordnung. Dabei kann sich der Schlitten beispielsweise in Relation zu der axialen Bewegung des Setzgerätes bewegen und die Befestigungselementhalteanordnung in einer Kulissenführung zwangsführen, so dass die Befestigungselementhalteanordnung eine axiale Bewegung in Richtung des Mundstückes beschreitet. Durch diese axiale Bewegung der Befestigungselementhalteanordnung entlang der Kulissenführung, kann ein von dem Vereinzeler an die Befestigungselementhalteanordnung übergebenes Befestigungselement definiert zum Mundstück transportiert werden.

In einer noch anderen bevorzugten Ausführungsform der Erfindung weist die Befestigungselementantriebsanordnung ein Antriebsmittel zum Eintreiben des Befestigungselements auf, wobei das Antriebsmittel mit einem Betätigungsmittel (z.B. einem Schlitten) zum Öffnen der Haltebacken verbunden ist. Wenn das Betätigungsmittel in Form eines Schlittens ausgestaltet ist, so kann dieser beispielsweise die Haltebacken entlang einer Kulissenführung zwangsführen, wobei die Kulissenführung so ausgestaltet sein kann, dass diese beim Zwangsführen der Haltebacken, dass Öffnen der Haltebacken bewirkt. Dabei kann beispielsweise der Schlitten mit dem Antriebsmittel verbunden sein und somit die Haltebacken relativ zur Bewegung des Antriebsmittels entlang der Kulissenführung zwangsführen. Hierdurch wird sichergestellt, dass gleichzeitig mit dem Öffnen der Haltebacken der Kopf des Befestigungselements mit einem korrespondierenden Eingriffselement (z.B. einem Antriebsbit) des Antriebsmittels in Eingriff gelangt, so dass ein Schiefstellen des Befestigungselements bei der Übernahme durch das Antriebsmittel ausgeschlossen wird. Das Antriebsmittel und das Betätigungsmittel weisen diesbezüglich eine aufeinander abgestimmte Dimensionierung auf.

In einer weiteren bevorzugten Ausführungsform der Erfindung weist die Linearlagerung zumindest einen an der Mundstückanordnung angeordneten Träger auf. Auf diese Weise wird eine stabile Führung für die Befestigungselementantriebsanordnung sowie für die Befestigungselementhalteanordnung bereitgestellt.

In einer anderen bevorzugten Ausführungsform der Erfindung wird die Befestigungselementhalteanordnung gleitend an dem zumindest einen Träger geführt. Mit anderen Worten, die Mundstückanordnung kann einseitig an einen Träger oder aber beidseitig an zwei Träger angebunden sein. Dabei kann die Mundstückanordnung beispielsweise auch abklappbar oder ganz abnehmbar an dem Träger befestigt sein. Wenn die Mundstückanordnung abklappbar befestigt ist, kann beispielsweise die Mundstückanordnung auf einer Seite von dem Träger drehbar befestigt sein und auf der anderen Seite mittels eines Klickmechanismus befestigt sein, so dass sich die Mundstückanordnung abklappen lässt, falls ein Befestigungsmittel sich doch einmal verklemmt haben sollte. Im Fall der einseitigen Anbindung sind die Haltebacken mit dem auf der vom Mundstück abgewandten Seite des Trägers angeordneten Schlitten über geeignete Verbindungsmittel (z.B. ein Gestänge) verbunden. Im Fall der beidseitigen Anbindung sind die Haltebacken ggf. mit zwei Schlitten, wobei jeder der beiden Schlitten auf der jeweils vom Mundstück abgewandten Seite des jeweiligen Trägers angeordnet ist, verbunden.

In einer bevorzugten Ausführungsform des erfindungsgemäßen Verfahrens wird in einem weiteren Schritt (c) eine Relativbewegung der Befestigungselementantriebsanordnung gegenüber der Befestigungselementhalteanordnung und der Mundstückanordnung ausgeführt, wobei ein Betätigungsmittel der Befestigungselementantriebsanordnung zum Öffnen der Haltebacken in Eingriff mit den Haltebacken gelangt und wobei gleichzeitig ein Antriebsmittel der Befestigungselementantriebsanordnung in Eingriff mit dem Kopf des Befestigungselements gelangt. Auf diese Weise wird ein Schiefstellen der Schraube wirksam verhindert. Das Betätigungsmittel zum Öffnen der Haltebacken kann aber auch durch einen Schlitten realisiert sein, der die Haltebacken entlang einer Kulissenführung zwangsführt, wobei die Kulissenführung so ausgestaltet sein kann, dass diese ein öffnen der Haltebacken erzwingt.

In einer weiteren bevorzugten Ausführungsform des erfindungsgemäßen Verfahrens wird in einem weiteren Schritt (d) die Relativbewegung der Befestigungselementantriebsanordnung gegenüber der Befestigungselementhalteanordnung und der Mundstückanordnung fortgeführt, wobei das Befestigungselement durch das Antriebsmittel durch die Mundstückbacken hindurch bewegt und in den Untergrund eingetrieben wird. Hierdurch wird ein gerades Setzen des Befestigungselements sichergestellt.

In einer anderen bevorzugten Ausführungsform des erfindungsgemäßen Verfahrens schlägt in Schritt (b) die Befestigungselementhalteanordnung an einem Anschlag der Mundstückanordnung an, welcher die gemeinsame Relativbewegung der Befestigungselementantriebsanordnung und der Befestigungselementhalteanordnung begrenzt. Der Anschlag dient zum einem dem definierten Einbringen des Befestigungselements in die Mundstückbacken. Der Anschlag kann ggf. aber auch den Kopplungsmechanismus zwischen Befestigungselementantriebsanordnung und Befestigungselementhalteanordnung auslösen, so dass die Befestigungselementantriebsanordnung beim Übernehmen und Eintreiben des Befestigungselements von der Befestigungselementhalteanordnung entkoppelt ist.

Anhand der beigefügten Zeichnungen wird die erfindungsgemäße Befestigungselementsetzeinheit veranschaulicht. Es zeigen:
- Fig. 1:: eine perspektivische Ansicht der erfindungsgemäßen Befestigungselementsetzeinheit in ihrer Grundstellung;
- Fig. 2:: eine perspektivische Ansicht der erfindungsgemäßen Befestigungselementsetzeinheit beim Einbringen des Befestigungselements in die Mundstückanordnung;
- Fig. 3:: eine perspektivische Ansicht der erfindungsgemäßen Befestigungselementsetzeinheit in der Stellung gemäß Fig. 2, wobei der vordere Teil der Mundstückanordnung weggebrochen wurde;
- Fig. 4:: eine perspektivische Ansicht der erfindungsgemäßen Befestigungselementsetzeinheit beim Hindurchdrücken des Befestigungselements durch die Mundstückbacken;
- Fig. 5:: eine perspektivische Ansicht der erfindungsgemäßen Befestigungselementsetzeinheit beim Eintreiben des Befestigungselements in einen Untergrund.

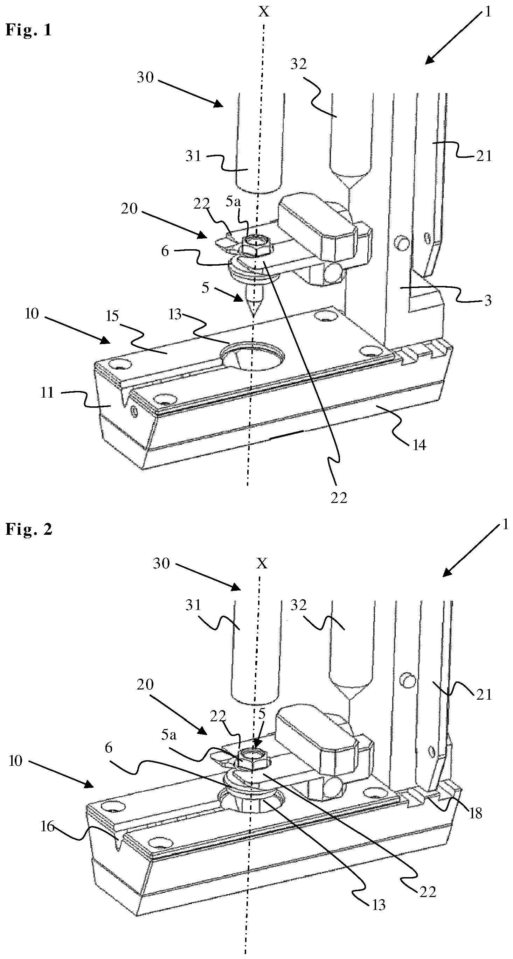

In **Fig. 1** wird die erfindungsgemäße Befestigungselementsetzeinheit 1 für ein Stand-Up-Tool zum Setzen von Schrauben 5, welche mit einer Dichtscheibe 6 versehen sind, in ihrer Grundstellung gezeigt. Die Befestigungselementsetzeinheit 1 umfasst eine Mundstückanordnung 10, eine Befestigungselementhalteanordnung 20 sowie eine Befestigungselementantriebsanordnung 30. Die Mundstückanordnung 10 ist vermittels einer Linearlagerung bzw. einem Träger 3 mit der Befestigungselementantriebsanordnung 30 verbunden (nicht gezeigt) und die Befestigungselementhalteanordnung 20 ist mit der Befestigungselementantriebsanordnung 30 gekoppelt (nicht gezeigt), wobei die Verbindung bzw. Kopplung jeweils eine übliche mechanische Verbindung bzw. ein üblicher mechanischer Kopplungsmechanismus ist (z.B. ein Kulissenmechanismus). Die Linearlagerung bzw. der Träger 3 kann beispielsweise zwei Federelemente (nicht gezeigt) aufweisen, über die die Befestigungselementantriebsanordnung 30, die Befestigungselementhalteanordnung 20 und die Mundstückanordnung 10 miteinander verbunden sind. Jedenfalls ist die Befestigungselementantriebsanordnung 30 vermittels der Linearlagerung bzw. dem Träger 3 in axialer Richtung X relativ zu der Mundstückanordnung 10 sowie relativ zu der Befestigungselementhalteanordnung 20 bewegbar und die Befestigungselementhalteanordnung 20 ist in axialer Richtung X relativ zu der Mundstückanordnung 10 bewegbar. Die Mundstückanordnung 10 umfasst einen Grundkörper 11 mit einer Durchgangsöffnung 13 für das Befestigungselement 5. Der Grundkörper 11 umfasst des Weiteren eine Deckplatte 15 an seiner Oberseite sowie eine Bodenplatte 14 an seiner Unterseite. Die Befestigungselementhalteanordnung 20 umfasst zwei lösbare Haltebacken 22, in welche die Schraube 5 bzw. der Schraubenkopf 5a eingebracht worden ist. Die Haltebacken 22 sind durch eine nicht dargestellte Anbindung mit einem Schlitten 21 verbunden und am Träger 3 geführt. Die Befestigungselementantriebsanordnung 30 umfasst ein Antriebsmittel bzw. Antriebsbit 31 zum Eintreiben der Schraube 5. Das Antriebsmittel 31 ist mit einem Betätigungsmittel 32 zum Öffnen der Haltebacken 22 verbunden. Das Antriebsmittel 31 und das Betätigungsmittel 32 weisen in der Grundstellung in etwa denselben Abstand zur Ebene der Haltebacken 22 auf.

In Fig. 2 ist durch eine gemeinsame Relativbewegung der Befestigungselementantriebsanordnung 30 und der Befestigungselementhalteanordnung 20 gegenüber der Mundstückanordnung 10 die in den Haltebacken 22 gehaltene Schraube 5 auf zentrierte Weise in die Mundstückanordnung 10 eingebracht worden. Die Haltebacken 22 halten den Schraubenkopf 5a noch fest. Der Schlitten 21 der Befestigungselementhalteanordnung 20 ist an einem Anschlag 18 der Mundstückanordnung 10 angeschlagen. Dadurch kann ggf. ein Kopplungsmechanismus (nicht gezeigt) zwischen der Befestigungselementhalteanordnung 20 und der Befestigungselementantriebsanordnung 30 betätigt werden. Der Abstand des Antriebsmittels 31 und des Betätigungsmittels 32 zur Ebene der Haltebacken 22 ist in dieser Position derselbe wie in der Grundstellung gemäß **Fig. 1****.** Die Dichtscheibe 6 der Schraube 5 befindet sich knapp über der Durchgangsöffnung 13. Die Mundstückanordnung 10 weist an ihrem vom Träger 3 entfernten Ende eine Einkerbung 16 auf, welche sich durchgehend bis zur Durchgangsöffnung 13 erstreckt. Auf diese Weise kann ein Freiraum für die Schraube 5 bei deren Übergabe vom Vereinzeler (nicht gezeigt) in die Haltebacken 22 geschaffen werden.

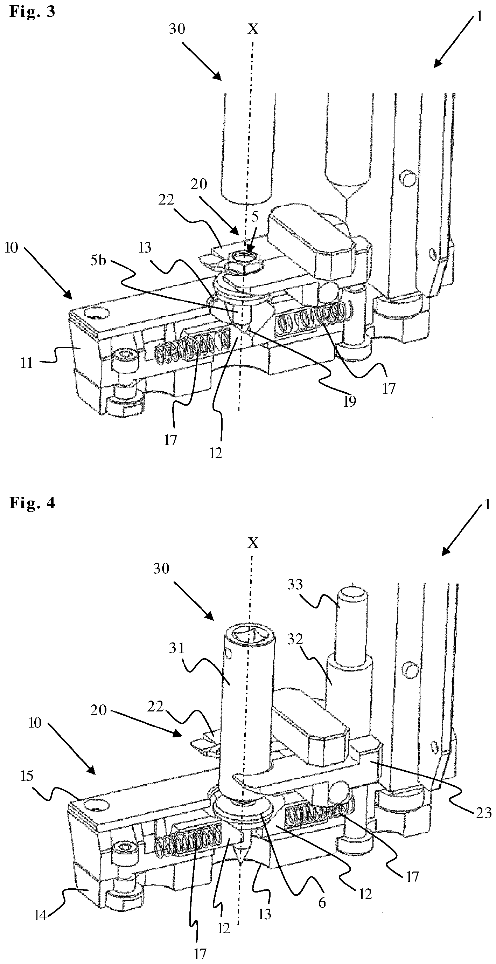

In **Fig. 3** wird insbesondere das Innere der Mundstückanordnung 10 in der Stellung gemäß **Fig. 2** veranschaulicht. Die Spitze des Schraubenschafts 5b wird von einer Öffnung 19, die von den geschlossenen Mundstückbacken 12 (mittig) freigelassen wird (und die im Wesentlichen dem Durchmesser des Schraubenschafts 5b entspricht) aufgenommen, so dass die im Grundkörper 11 federnd gelagerten Mundstückbackenfedern 17 noch in ihrer Ruhestellung sind. Die Mundstückbacken 12 weisen eine konische Form auf und bilden im geschlossenen Zustand einen halbkugelförmigen Trichter. Das definierte Einführen der Schraube 5 in die Mundstückanordnung 10 ermöglicht im Übrigen, dass der Durchmesser der Durchgangsöffnung 13 nur unwesentlich größer als der Durchmesser der Dichtscheibe 6 dimensioniert sein muss.

Bei der in **Fig. 4** gezeigten Stellung der erfindungsgemäßen Befestigungselementsetzeinheit 1 ist durch eine weitere bzw. fortgeführte Relativbewegung der Befestigungselementantriebsanordnung 30 gegenüber der Befestigungselementhalteanordnung 20 und der Mundstückanordnung 10 das Antriebsmittel bzw. Antriebsbit 31 in Eingriff mit dem Schraubenkopf 5a gelangt und gleichzeitig ist das Betätigungsmittel 32 in Eingriff mit einem Freigabemechanismus 23 der Haltebacken 22 gelangt, wodurch die Haltebacken 22 geöffnet wurden und die Schraube 5 freigegeben wurde. Anstelle des Betätigungsmittels 32, wie in dem hier gezeigten Ausführungsbeispiel gezeigt, kann auch der Schlitten 21 mit den Haltebacken 22 direkt derart zusammenwirken, dass der Schlitten 21 die Haltebacken 22 entlang einer Kulissenführung zwangsführt und die Haltebacken 22 durch die Ausgestaltung der Kulissenführung geöffnet werden, so dass das Betätigungsmittel 32 nicht benötigt wird. Die Schraube 5 ist in dem Beispiel gezeigt in Fig. 4 nun soweit in die Mundstückanordnung 10 eingebracht, dass sich die Dichtscheibe 6 unterhalb der Ebene der Deckplatte 15 befindet und die Mundstückbacken 12 gegen die Kraft der Mundstückbackenfedern 17 ein Stück weit auseinandergedrückt hat. Die Spitze des Schraubenschafts 5b befindet sich im unteren Bereich der Durchgangsöffnung 13 in der Bodenplatte 14. Die Schraube 5 gleitet nunmehr kontinuierlich mit ihrer Dichtscheibe 6 an den konischen Mundstückbacken 12 entlang und drückt diese immer weiter auseinander, so dass sie im Wesentlichen präzise entlang der Achse X geführt wird. Die Bewegung des Betätigungsmittels 32 der Befestigungselementantriebsanordnung 30 wird im Übrigen von der Mundstückanordnung gestoppt, wobei ein Kolbenelement 33 (ggf. gegen die Kraft einer nicht dargestellten Feder) in das Betätigungsmittel 32 hineingeschoben wird.

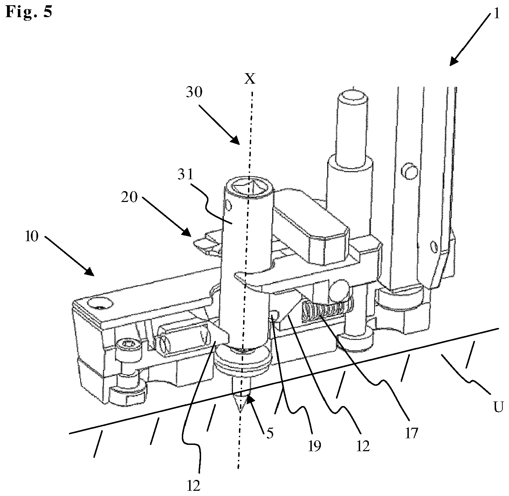

In der in **Fig. 5** gezeigten Stellung ist die Schraube 5 von dem Antriebsmittel 31 bereits vollständig durch die Mundstückbacken 12 hindurch gedrückt worden und größtenteils in den Untergrund U eingeschraubt worden. Die Mundstückbacken 12 geben den Weg für das Antriebsmittel 31 weiter frei. Das Eintreiben der Schraube 5 in den Untergund U beginnt allerdings noch so lange die Schraube 5 von den Mundstückbacken 12 gehalten wird.

Im Folgenden wird ein Setzvorgang mit der erfindungsgemäßen Befestigungselementsetzeinheit schrittweise erläutert: In einem ersten Schritt wird ein Befestigungselement 5 (z. B. eine Schraube, eine Schraube mit Dichtscheibe, eine Niete oder ein Nagel) in die Haltebacken 22 der Befestigungselementhalteanordnung 20 eingebracht. Das Befestigungselement wird dabei regelmäßig aus einem in das entsprechende Setzgerät einbringbaren Magazinstreifen (nicht gezeigt) in die Haltebacken 22 geladen. Durch Ausüben eines Drucks durch eine Bedienperson auf die Befestigungselementsetzeinheit 1 wird anschließend eine gemeinsame Relativbewegung der Befestigungselementantriebsanordnung 30 und der Befestigungselementhalteanordnung 20 gegenüber der Mundstückanordnung 10 ausgeführt, wobei das Befestigungselement 5 zentriert in die Mundstückbacken 12 der Mundstückanordnung 10 eingebracht wird. Die Spitze des Befestigungselementschafts 5b kann hierbei in einer Öffnung 19, die die geschlossenen Mundstückbacken 12 freilassen, aufgenommen werden. Die Mundstückanordnung 10 bildet einen Anschlag 18, welcher die Bewegung der Befestigungselementhalteanordnung 20 begrenzt. Danach wird durch weiteren Druck durch die Bedienperson eine Relativbewegung der Befestigungselementantriebsanordnung 30 gegenüber der Befestigungselementhalteanordnung 20 und der Mundstückanordnung 10 ausgeführt, wobei das Betätigungsmittel 32 der Befestigungselementantriebsanordnung 30 zum Öffnen der Haltebacken 22 in Eingriff mit den Haltebacken 22 bzw. deren Freigabemechanismus 23 gelangt und wobei gleichzeitig das Antriebsmittel 31 der Befestigungselementantriebsanordnung 30 in Eingriff mit dem Kopf 5a des Befestigungselements 5 gelangt. Durch anhaltenden Druck durch die Bedienperson wird die Relativbewegung der Befestigungselementantriebsanordnung 30 gegenüber der Befestigungselementhalteanordnung 20 und der Mundstückanordnung 10 fortgeführt, wobei das Befestigungselement 5 durch das Antriebsmittel 31 durch die Mundstückbacken 12 hindurch bewegt und in den Untergrund (z.B. in Längsstoß bei Trapezprofilblechen) eingetrieben wird. Der Eintreibvorgang beginnt regelmäßig wenn das Befestigungselement 5 noch von den Mundstückhaltebacken 12 gehalten wird. Im Anschluss an den Setzvorgang werden die Mundstückanordnung 10, die Befestigungselementhalteanordnung 20 und die Befestigungselementantriebsanordnung 30 durch Entspannung der jeweiligen Federelemente in ihre Grundstellung zurückgeführt.

### Bezugszeichenliste:

- 1: Befestigungselementsetzeinheit
- 3: Träger
- 5: Befestigungselement
- 5a: Befestigungselementkopf
- 5b: Befestigungselementschaft
- 6: Dichtscheibe
- 10: Mundstückanordnung
- 11: Grundkörper
- 12: Mundstückbacken
- 13: Durchgangsöffnung
- 14: Bodenplatte
- 15: Deckplatte
- 16: Einkerbung
- 17: Mundstückbackenfedern
- 18: Anschlag
- 19: Öffnung
- 20: Befestigungselementhalteanordnung
- 21: Schlitten
- 22: Haltebacken
- 23: Freigabemechanismus
- 30: Befestigungselementantriebsanordnung
- 31: Antriebsmittel
- 32: Betätigungsmittel
- 33: Kolbenelement
- X: axiale Richtung
- U: Untergrund

## Patentansprüche

1. Befestigungselementsetzeinheit (1) für ein Befestigungselementsetzgerät zum Setzen von Befestigungselementen (5) welche mit einer Dichtscheibe versehen sind, aufweisend
eine Mundstückanordnung (10),
eine Befestigungselementhalteanordnung (20) sowie
eine Befestigungselementantriebsanordnung (30), wobei die Mundstückanordnung (10) vermittels einer Linearlagerung mit der Befestigungselementantriebsanordnung (30) verbunden ist und wobei die Befestigungselementhalteanordnung (20) mit der Befestigungselementantriebsanordnung (30) gekoppelt ist, wobei die Befestigungselementantriebsanordnung (30) vermittels der Linearlagerung in axialer Richtung (X) relativ zu der Mundstückanordnung (10) sowie relativ zu der Befestigungselementhalteanordnung (20) bewegbar ist und wobei die Befestigungselementhalteanordnung (20) in axialer Richtung (X) relativ zu der Mundstückanordnung (10) bewegbar ist, und wobei durch eine gemeinsame Relativbewegung der Befestigungselementantriebsanordnung (30) und der Befestigungselementhalteanordnung (20) gegenüber der Mundstückanordnung (10) ein in der Befestigungselementhalteanordnung (20) befindliches und gehaltenes vereinzeltes Befestigungselement (5) zur Mundstückanordnung (10) geführt wird und auf zentrierte Weise in die Mundstückanordnung (10) eingebracht wird
**dadurch gekennzeichnet, dass** das Befestigungselement (5) durch zumindest zwei federnd gelagerte Mundstückbacken (12) gehalten wird zum Setzen des Befestigungselements (5) mit einem Antriebsmittel (31).

2. Befestigungselementsetzeinheit (1) nach Anspruch 1, **dadurch gekennzeichnet, dass** durch eine weitere Relativbewegung der Befestigungselementantriebsanordnung (30) gegenüber der Befestigungselementhalteanordnung (20) und der Mundstückanordnung (10) das Befestigungselement (5) durch die Mundstückanordnung (10) hindurch in einen Untergrund (U) eintreibbar ist.

3. Befestigungselementsetzeinheit (1) nach einem der vorhergehenden Ansprüche, **dadurch gekennzeichnet, dass** die Linearlagerung zumindest ein erstes Federelement aufweist.

4. Befestigungselementsetzeinheit (1) nach einem der vorhergehenden Ansprüche, **dadurch gekennzeichnet, dass** die Befestigungselementantriebsanordnung (30) über ein zweites Federelement oder über einen lösbaren Kopplungsmechanismus mit der Befestigungselementhalteanordnung (20) gekoppelt ist.

5. Befestigungselementsetzeinheit nach einem der vorhergehenden Ansprüche, **dadurch gekennzeichnet, dass** die Mundstückanordnung (10) einen Grundkörper (11) mit einer Durchgangsöffnung (13) für das Befestigungselement (5) aufweist, wobei die zumindest zwei federnd in dem Grundkörper (11) gelagerten Mundstückbacken (12) die Durchgangsöffnung (13) im unbetätigten Zustand verschließen.

6. Befestigungselementsetzeinheit (1) nach Anspruch 5, **dadurch gekennzeichnet, dass** die zumindest zwei Mundstückbacken (12) eine konische Form aufweisen.

7. Befestigungselementsetzeinheit (1) nach einem der vorhergehenden Ansprüche, **dadurch gekennzeichnet, dass** die Befestigungselementhalteanordnung (20) lösbare Haltebacken (22) zum Halten und Freigeben des Befestigungselements (5) sowie einen mit den Haltebacken (22) verbundenen Schlitten (21) aufweist.

8. Befestigungselementsetzeinheit (1) nach einem der vorhergehenden Ansprüche, **dadurch gekennzeichnet, dass** die Befestigungselementantriebsanordnung (30) das Antriebsmittel (31) zum Eintreiben des Befestigungselements aufweist, wobei das Antriebsmittel (31) mit einem Betätigungsmittel (32) zum Öffnen der Haltebacken (22) verbunden ist.

9. Befestigungselementsetzeinheit (1) nach einem der vorhergehenden Ansprüche, **dadurch gekennzeichnet, dass** die Linearlagerung zumindest einen an der Mundstückanordnung (10) angeordneten Träger (3) aufweist.

10. Befestigungselementsetzeinheit (1) nach Anspruch 9, **dadurch gekennzeichnet, dass** die Befestigungselementhalteanordnung (20) gleitend an dem zumindest einen Träger (3) geführt wird.

11. Verfahren zum zentrierten Setzen von Befestigungselementen (5), welche mit einer Dichtscheibe versehen sind, vermittels einer Befestigungselementsetzeinheit (1) eines Befestigungselementsetzgeräts, welche eine Mundstückanordnung (10), eine Befestigungselementhalteanordnung (20) sowie eine Befestigungselementantriebsanordnung (30) aufweist, welche in axialer Richtung (X) relativ zueinander bewegbar angeordnet sind, mit zumindest den folgenden Schritten:
(a) Einbringen eines vereinzelten Befestigungselements (5) in Haltebacken (22) der Befestigungselementhalteanordnung (20);
(b) Ausführen einer gemeinsamen Relativbewegung der Befestigungselementantriebsanordnung (30) und der Befestigungselementhalteanordnung (20) gegenüber der Mundstückanordnung (10), wobei das Befestigungselement (5) von der Befestigungselementhalteanordnung (20) gehalten wird und zur Mundstückanordnung (10) geführt wird und zentriert in Mundstückbacken (12) der Mundstückanordnung (10) eingebracht wird,
**dadurch gekennzeichnet, dass** das Befestigungselement (5) durch zumindest zwei federnd gelagerte Mundstückbacken (12) der Mundstückanordnung (10) gehalten wird zum Setzen des Befestigungselements (5) mit einem Antriebsmittel (31).

12. Verfahren nach Anspruch 11 aufweisend den weiteren Schritt:
(c) Ausführen einer Relativbewegung der Befestigungselementantriebsanordnung (30) gegenüber der Befestigungselementhalteanordnung (20) und der Mundstückanordnung (10), wobei ein Betätigungsmittel (32) der Befestigungselementantriebsanordnung (30) zum Öffnen der Haltebacken (22) in Eingriff mit den Haltebacken (22) gelangt und wobei gleichzeitig das Antriebsmittel (31) der Befestigungselementantriebsanordnung (30) in Eingriff mit dem Kopf (5a) des Befestigungselements (5) gelangt.

13. Verfahren nach Anspruch 12 aufweisend den weiteren Schritt:
(d) Fortführen der Relativbewegung der Befestigungselementantriebsanordnung (30) gegenüber der Befestigungselementhalteanordnung (20) und der Mundstückanordnung (10), wobei das Befestigungselement (5) durch das Antriebsmittel (31) durch die Mundstückbacken (12) hindurch bewegt und in den Untergrund eingetrieben wird, wobei die zumindest zwei Mundstückbacken (12) durch das Antriebsmittel (31) auseinandergedrückt werden.

14. Verfahren nach Anspruch 11, **dadurch gekennzeichnet, dass** in Schritt (b) die Befestigungselementhalteanordnung (20) an einem Anschlag (18) der Mundstückanordnung (10) anschlägt, welcher die gemeinsame Relativbewegung der Befestigungselementantriebsanordnung (30) und der Befestigungselementhalteanordnung (20) begrenzt.

## Claims

1. Fastening element setting unit (1) for a fastening element setting tool for setting fastening elements (5) which are provided with a sealing disc, comprising
a mouthpiece assembly (10),
a fastening element holding assembly (20), and
a fastening element driving assembly (30), wherein the mouthpiece assembly (10) is connected to the fastening element driving assembly (30) by means of a linear bearing, and wherein the fastening element holding assembly (20) is coupled to the fastening element driving assembly (30), wherein the fastening element driving assembly (30) is movable by means of the linear bearing in the axial direction (X) relative to the mouthpiece assembly (10) as well as relative to the fastening element holding assembly (20), and wherein the fastening element holding assembly (20) is movable in the axial direction (X) relative to the mouthpiece assembly (10), and wherein by a common relative movement of the fastening element driving assembly (30) and the fastening element holding assembly (20) relative to the mouthpiece assembly (10), a separated fastening element (5) located and held in the fastening element holding assembly (20) is guided to the mouthpiece assembly (10) and is introduced into the mouthpiece assembly (10) in a centred manner **characterized in that** the fastening element (5) is held by at least two spring-loaded mouthpiece jaws (12) for setting the fastening element (5) with a drive means (31).

2. Fastening element setting unit (1) according to claim 1, **characterized in that** the fastening element (5) can be driven through the mouthpiece assembly (10) into a substructure (U) by a further relative movement of the fastening element driving assembly (30) relative to the fastening element holding assembly (20) and the mouthpiece assembly (10).

3. Fastening element setting unit (1) according to one of the preceding claims, **characterized in that** the linear bearing has at least one first spring element.

4. Fastening element setting unit (1) according to one of the preceding claims, **characterized in that** the fastening element driving assembly (30) is coupled to the fastening element holding assembly (20) via a second spring element or via a releasable coupling mechanism.

5. Fastening element setting unit according to one of the preceding claims, **characterized in that** the mouthpiece assembly (10) has a base body (11) with a through opening (13) for the fastening element (5), the at least two mouthpiece jaws (12) mounted spring-loadedly in the base body (11) closing the through opening (13) in the unactuated state.

6. Fastening element setting unit (1) according to claim 5, **characterized in that** the at least two mouthpiece jaws (12) have a conical shape.

7. Fastening element setting unit (1) according to one of the preceding claims, **characterized in that** the fastening element holding assembly (20) comprises releasable holding jaws (22) for holding and releasing the fastening element (5) as well as a carriage (21) connected to the holding jaws (22).

8. Fastening element setting unit (1) according to one of the preceding claims, **characterized in that** the fastening element driving assembly (30) comprises the driving means (31) for driving the fastening element, the driving means (31) being connected to an actuating means (32) for opening the holding jaws (22).

9. Fastening element setting unit (1) according to one of the preceding claims, **characterized in that** the linear bearing comprises at least one support (3) arranged on the mouthpiece assembly (10).

10. Fastening element setting unit (1) according to claim 9, **characterized in that** the fastening element holding assembly (20) is guided slidingly on the at least one support (3).

11. Method for centred setting of fastening elements (5), which are provided with a sealing disc, by means of a fastening element setting unit (1) of a fastening element setting tool, which comprises a mouthpiece assembly (10), a fastening element holding assembly (20) and a fastening element driving assembly (30), which are arranged movably relative to one another in the axial direction (X), comprising at least the following steps:
(a) inserting a single fastening element (5) into holding jaws (22) of the fastening element holding assembly (20);
(b) performing a common relative movement of the fastening element driving assembly (30) and the fastening element holding assembly (20) relative to the mouthpiece assembly (10), wherein the fastening element (5) is held by the fastening element holding assembly (20) and is guided to the mouthpiece assembly (10) and is introduced in a centred manner into mouthpiece jaws (12) of the mouthpiece assembly (10), **characterized in that** the fastening element (5) is held by at least two spring-loaded mouthpiece jaws (12) of the mouthpiece assembly (10) for setting the fastening element (5) with a drive means (31).

12. Method according to claim 11 comprising the further step:
(c) performing a relative movement of the fastening element driving assembly (30) relative to the fastening element holding assembly (20) and the mouthpiece assembly (10), wherein an actuator means (32) of the fastening element driving assembly (30) engages the holding jaws (22) to open the holding jaws (22) and wherein simultaneously the drive means (31) of the fastening element driving assembly (30) engages the head (5a) of the fastening element (5).

13. Method according to claim 12 comprising the further step:
(d) continuing the relative movement of the fastening element driving assembly (30) relative to the fastening element holding assembly (20) and the mouthpiece assembly (10), the fastening element (5) being moved through the mouthpiece jaws (12) by the drive means (31) and driven into the substructure, wherein the at least two mouthpiece jaws (12) are pushed apart by the drive means (31).

14. Method according to claim 11, **characterized in that** in step (b) the fastening element holding assembly (20) hits a stop (18) of the mouthpiece assembly (10) which limits the common relative movement of the fastening element driving assembly (30) and the fastening element holding assembly (20).

## Revendications

1. Unité d'insertion d'élément de fixation (1) pour un appareil d'insertion d'élément de fixation pour l'insertion d'éléments de fixation (5) lesquels sont dotés d'un disque d'étanchéité, présentant
un ensemble embout (10),
un ensemble de maintien d'élément de fixation (20) ainsi qu'un ensemble d'entraînement d'élément de fixation (30), dans laquelle l'ensemble embout (10) est relié à l'ensemble d'entraînement d'élément de fixation (30) au moyen d'un palier linéaire et dans laquelle l'ensemble de maintien d'élément de fixation (20) est couplé avec l'ensemble d'entraînement d'élément de fixation (30), dans laquelle l'ensemble d'entraînement d'élément de fixation (30) est déplaçable au moyen du palier linéaire dans la direction axiale (X) par rapport à l'ensemble embout (10) ainsi que par rapport à l'ensemble de maintien d'élément de fixation (20) et dans laquelle l'ensemble de maintien d'élément de fixation (20) est déplaçable dans la direction axiale (X) par rapport à l'ensemble embout (10), et dans laquelle par un mouvement relatif commun de l'ensemble d'entraînement d'élément de fixation (30) et de l'ensemble de maintien d'élément de fixation (20) par rapport à l'ensemble embout (10), un élément de fixation (5) isolé maintenu et se trouvant dans l'ensemble de maintien d'élément de fixation (20) est guidé vers l'ensemble embout (10) et introduit de manière centrée dans l'ensemble embout (10) **caractérisée en ce que** l'élément de fixation (5) est maintenu par au moins deux mâchoires d'embout (12) logées élastiquement pour l'insertion de l'élément de fixation (5) avec un moyen d'entraînement (31).

2. Unité d'insertion d'élément de fixation (1) selon la revendication 1, **caractérisée en ce que** par un autre mouvement relatif de l'ensemble d'entraînement d'élément de fixation (30) par rapport à l'ensemble de maintien d'élément de fixation (20) et à l'ensemble embout (10), l'élément de fixation (5) peut être enfoncé dans un sol (U) par l'ensemble embout (10).

3. Unité d'insertion d'élément de fixation (1) selon l'une quelconque des revendications précédentes, **caractérisée en ce que** le palier linéaire présente au moins un premier élément ressort.

4. Unité d'insertion d'élément de fixation (1) selon l'une quelconque des revendications précédentes, **caractérisée en ce que** l'ensemble d'entraînement d'élément de fixation (30) est couplé avec l'ensemble de maintien d'élément de fixation (20) par le biais d'un deuxième élément ressort ou par le biais d'un mécanisme de couplage amovible.

5. Unité d'insertion d'élément de fixation selon l'une quelconque des revendications précédentes, **caractérisée en ce que** l'ensemble embout (10) présente un corps de base (11) avec une ouverture de passage (13) pour l'élément de fixation (5), dans laquelle les au moins deux mâchoires d'embout (12) logées élastiquement dans le corps de base (11) ferment l'ouverture de passage (13) à l'état non actionné.

6. Unité d'insertion d'élément de fixation (1) selon la revendication 5, **caractérisée en ce que** les au moins deux mâchoires d'embout (12) présentent une forme conique.

7. Unité d'insertion d'élément de fixation (1) selon l'une quelconque des revendications précédentes, **caractérisée en ce que** l'ensemble de maintien d'élément de fixation (20) présente des mâchoires de retenue (22) amovibles pour maintenir et libérer l'élément de fixation (5) ainsi qu'un chariot (21) relié aux mâchoires de retenue (22).

8. Unité d'insertion d'élément de fixation (1) selon l'une quelconque des revendications précédentes, **caractérisée en ce que** l'ensemble d'entraînement d'élément de fixation (30) présente le moyen d'entraînement (31) pour l'enfoncement de l'élément de fixation, dans laquelle le moyen d'entraînement (31) est relié à un moyen d'actionnement (32) pour l'ouverture des mâchoires de retenue (22).

9. Unité d'insertion d'élément de fixation (1) selon l'une quelconque des revendications précédentes, **caractérisée en ce que** le palier linéaire présente un support (3) agencé au niveau de l'ensemble embout (10).

10. Unité d'insertion d'élément de fixation (1) selon la revendication 9, **caractérisée en ce que** l'ensemble de maintien d'élément de fixation (20) est guidé de manière coulissante au niveau de l'au moins un support (3).

11. Procédé d'insertion centrée d'éléments de fixation (5), lesquels sont dotés d'un disque d'étanchéité, au moyen d'une unité d'insertion d'élément de fixation (1) d'un appareil d'insertion d'élément de fixation, laquelle présente un ensemble embout (10), un ensemble de maintien d'élément de fixation (20) ainsi qu'un ensemble d'entraînement d'élément de fixation (30), lesquels sont agencés déplaçables l'un par rapport à l'autre dans la direction axiale (X), avec au moins les étapes suivantes :
(a) introduction d'un élément de fixation (5) isolé dans des mâchoires de retenue (22) de l'ensemble de maintien d'élément de fixation (20) ;
(b) réalisation d'un mouvement relatif commun de l'ensemble d'entraînement d'élément de fixation (30) et de l'ensemble de maintien d'élément de fixation (20) par rapport à l'ensemble embout (10), dans lequel l'élément de fixation (5) est maintenu par l'ensemble de maintien d'élément de fixation (20) et est guidé vers l'ensemble embout (10) et est introduit centré dans des mâchoires d'embout (12) de l'ensemble embout (10),
**caractérisé en ce que** l'élément de fixation (5) est maintenu par au moins deux mâchoires d'embout (12) logées élastiquement de l'ensemble embout (10) pour l'insertion de l'élément de fixation (5) avec un moyen d'entraînement (31).

12. Procédé selon la revendication 11 présentant l'autre l'étape de :
(c) réalisation d'un mouvement relatif de l'ensemble d'entraînement d'élément de fixation (30) par rapport à l'ensemble de maintien d'élément de fixation (20) et à l'ensemble embout (10), dans lequel un moyen d'actionnement (32) de l'ensemble d'entraînement d'élément de fixation (30) entre en prise avec les mâchoires de retenue (22) pour l'ouverture de mâchoires de retenue (22) et dans lequel en même temps le moyen d'entraînement (31) de l'ensemble d'entraînement d'élément de fixation (30) entre en prise avec la tête (5a) de l'élément de fixation (5).

13. Procédé selon la revendication 12 présentant l'autre l'étape de :
(d) poursuite du mouvement relatif de l'ensemble d'entraînement d'élément de fixation (30) par rapport à l'ensemble de maintien d'élément de fixation (20) et à l'ensemble embout (10), dans lequel l'élément de fixation (5) est déplacé par le moyen d'entraînement (31) à travers les mâchoires d'embout (12) et enfoncé dans le sol, dans lequel les au moins deux mâchoires d'embout (12) sont écartées par le moyen d'entraînement (31).

14. Procédé selon la revendication 11, **caractérisé en ce que** dans l'étape (b) l'ensemble de maintien d'élément de fixation (20) bute contre une butée (18) de l'ensemble embout (10), lequel délimite le mouvement relatif commun de l'ensemble d'entraînement d'élément de fixation (30) et de l'ensemble de maintien d'élément de fixation (20).
